Europäisches Patentamt

European Patent Office

Office européen des brevets

(19)

(11) **EP 1 212 832 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(51) Int Cl.[7]: **H03H 9/64**, G01B 17/00, G06K 11/14, H03H 9/145

(21) Anmeldenummer: **00960661.7**

(22) Anmeldetag: **14.09.2000**

(86) Internationale Anmeldenummer:
**PCT/EP2000/009001**

(87) Internationale Veröffentlichungsnummer:
**WO 2001/020781 (22.03.2001 Gazette 2001/12)**

(54) **VORRICHTUNG UND VERFAHREN ZUR ORTSAUFGELÖSTEN DETEKTION**

DEVICE AND METHOD FOR HIGH-SENSITIVITY RESOLUTION DETECTION

SYSTEME ET PROCEDE DE DETECTION A HAUTE RESOLUTION

(84) Benannte Vertragsstaaten:
**AT BE CH CY DE DK ES FI FR GB GR IE IT LI LU MC NL PT SE**

(30) Priorität: **16.09.1999 DE 19944452**

(43) Veröffentlichungstag der Anmeldung:
**12.06.2002 Patentblatt 2002/24**

(73) Patentinhaber: **Advalytix AG**
**85649 Brunnthal (DE)**

(72) Erfinder:
• **BEIL, Florian**
**83714 Miesbach (DE)**
• **STREIBL, Martin**
**85238 Petershausen (DE)**
• **WIXFORTH, Achim**
**80636 München (DE)**

(74) Vertreter: **Lettau, Christoph, Dr. et al**
**Lorenz - Seidler - Gossel**
**Widenmayerstrasse 23**
**80538 München (DE)**

(56) Entgegenhaltungen:
**DE-A- 19 706 486**          **US-A- 4 600 905**
**US-A- 5 818 310**          **US-A- 5 831 492**
**US-A- 5 850 118**

• **STREIBL M ET AL: "SAW tomography-spatially resolved charge detection by SAW in semiconductor structures for imaging applications" 1999 IEEE ULTRASONICS SYMPOSIUM. PROCEEDINGS. INTERNATIONAL SYMPOSIUM (CAT. NO.99CH37027), 1999 IEEE ULTRASONICS SYMPOSIUM. PROCEEDINGS. INTERNATIONAL SYMPOSIUM, CAESARS TAHOE, NV, USA, 17-20 OCT. 1999, Seiten 11-14 vol.1, XP002156577 1999, Piscataway, NJ, USA, IEEE, USA ISBN: 0-7803-5722-1**

**Beschreibung**

Die Erfindung betrifft eine Vorrichtung und ein Verfahren zur ortsaufgelösten Detektion einer äußeren Größe mit Hilfe akustischer Oberflächenwellen.

Akustische Oberflächenwellen werden seit etwa 30 Jahren für vielfältige Anwendungen in der Hochfrequenztechnik und der Sensorik eingesetzt. Eine Oberttächenwelle kann mit äußeren Größen wechselwirken, wie es von A. Wixforth 1987 (Dissertation A. Wixforth, Universität Hamburg, 1987) für die Wechselwirkung von Oberflächenwellen mit freien Ladungsträgern erwähnt ist. Ebenso kann gemäß U.S. 5,235,235 und U.S. 5,325,704 ein Massebetag auf dem Substrat nachgewiesen werden. Die Dämpfung einer Oberflächenwelle durch eine mechanische Belastung des Substrates ist in U.S. 5,767,608 und U.S. 5,838,088 beschrieben. Werden verschiedene Oberflächenwellenwandler zur Erzeugung verschiedener Oberflächenwellen eingesetzt, die eine unterschiedlich lange Strecke durchlaufen, so läßt sich anhand der unterschiedlichen Laufzeiten der Ort der mechanischen Belastung lokalisieren. Oberflächenwellen lassen sich mit Hilfe sogenannter Interdigitalwandler (IDT) vornehmlich auf piezoelektrischen Substraten erzeugen (R. M. White und F. W. Voltmer, Applied Physics Letters 7, Seiten 314 f. (1965)). Interdigitalwandler weisen zwei Elektroden mit fingerartigen Fortsätzen auf, deren Finger ineinander greifen. Die Ausbreitungseigenschaften der Oberflächenwelle hängen von dem Fingerabstand und der Phasengeschwindigkeit in dem Substratmaterial ab. Gemäß EP 0 867 826 A2 läßt sich eine solche Interdigitalwandleranordnung über eine Antenne und einen Sender funkabfragen. Oberflächenwellenbauelemente werden unter anderen als dispersive Hochfrequenzfilter eingesetzt. Um die Bandbreite zu erhöhen werden dazu sogenannte getaperte interdigitale Transducer (TIDT) eingesetzt, wie es in U.S. 4,908,542, U.S. 4,635,008, U.S. 5,831,492 oder U.S. 5,831,494 beschrieben ist. Bei derartigen getaperten interdigitalen Transducern ist der Fingerabstand nicht konstant, sondern verändert sich entlang der Transducerachse.

Aus US-A-5 850 118 ist bereits die Verwendung von Oberflächenwellen zur ortsaufgelösten Detektion einer äußeren Größe bekannt.

Die Aufgabe der vorliegenden Erfindung ist es, mit einer einfachen und kompakten Struktur eine ortsaufgelöste Messung einer äußeren Größe in sehr kleinem räumlichen Maßstab zu ermöglichen.

Diese Aufgabe wird mit einer Vorrichtung zur ortsaufgelösten Detektion einer außeren Größe mit den Merkmalen des Anspruches 1 bzw. ein Verfahren zur ortsaufgelösten Detektion einer äußeren Größe mit den Merkmalen des Anspruches 14 gelöst. Besondere Ausgestaltungen der Vorrichtung bzw. des Verfahrens sind Gegenstand der Unteransprüche.

Eine erfindungsgemäße Vorrichtung und ein erfindungsgemäßes Verfahren zum ortsaufgelösten Nachweis der Wechselwirkungen mindestens einer akustischen Oberflächenwelle mit mindestens einer äußeren Größe, die die akustische Oberflächenwelle(n) durch die Wechselwirkung in ihrer Ausbreitung beeinflußt, ist dadurch gekennzeichnet, daß die akustische Oberflächenwelle(n) durch die Verwendung mindestens eines speziell ausgeführten Oberflächenwellenwandlers je nach Eingangsfrequenz an einem anderen Ort des Bereichs mindestens einer aktiven Fläche der verwendeten Vorrichtung propagiert und somit über die Frequenz, bei der eine Wechselwirkung mit der äußeren Größe in der Übertragungsfunktion der verwendeten Oberflächenwellenwandler festgestellt wird, mindestens eine Ortsinformation und mindestens eine Information über die Art und Stärke der entsprechenden Wechselwirkung erhalten werden kann.

Eine erfindungsgemäße Vorrichtung zur ortsaufgelösten Detektion einer äußeren Größe weist ein z. B. piezoelektrisches Substrat auf, auf dem sich mindestens eine Einrichtung zur Erzeugung akustischer Oberflächenwellen durch Anlegen einer Eingangsfrequenz befindet. Die erfindungsgemäße Vorrichtung weist zumindest eine aktive Fläche auf, die derart angeordnet ist, daß sie durch diese mindestens eine Erzeugungseinrichtung mit einer akustischen Oberflächenwelle zur Wechselwirkung mit einer äußeren Größe beschickt werden kann. Das Substrat weist weiterhin mindestens eine Einrichtung zum Empfang der Oberflächenwellen nach Durchlaufen des aktiven Bereiches auf. Die Oberflächenwellenerzeugungseinrichtung ist derart ausgestaltet, daß sich der Ausbreitungsbereich der Oberflächenwellen in der aktiven Fläche mit der Eingangsfrequenz ändert.

Bei dem erfindungsgemäßen Verfahren wird eine akustische Oberflächenwelle zumindest in einer Richtung durch einen aktiven Bereich eines Substrates geschickt und detektiert. Der aktive Bereich wird lokal mit einer äußeren Größe in Wechselwirkung gebracht. Verschiedene Bereiche der aktiven Fläche werden mit Oberflächenwellen verschiedener Frequenzen beschickt. Die Änderung der Parameter der Oberflächenwellen durch die Wechselwirkung wird detektiert.

Bei der erfindungsgemäßen Vorrichtung und dem erfindungsgemäßen Verfahren ist also der räumliche Bereich, der jeweils von der Oberflächenwelle in dem aktiven Bereich überstrichen wird, von der Eingangsfrequenz abhängig. Ist der Zusammenhang zwischen Eingangsfrequenz und Ausbreitungsbereich der Oberflächenwelle bekannt, so kann jeder Frequenz ein Ausbreitungsbereich zugeordnet werden. Der Ortsbereich wird so in die Frequenzdomäne abgebildet. Tritt eine Oberflächenwelle bestimmter Frequenz mit einer äußeren Größe in Wechselwirkung, so ändern sich die Parameter dieser Oberflächenwelle. Diese Änderung kann nachgewiesen werden. Bei bekannter Frequenz der detektierten Oberflächenwelle kann aus dieser Änderung die Art und/oder die Stärke der Wechselwirkung bestimmt werden. Bei bekannter Frequenz, die den Ausbreitungsbereich bestimmt, kann auch der Ort der Wechselwirkung bestimmt werden.

Die erfindungsgemäße Vorrichtung läßt sich auf einem einzelnen Substrat, z. B. einem Chip zusammenfassen und ermöglicht die Messung lokaler Größen mit einer Auflösung im Mikrometerbereich. Die Herstellung kann z. B. mit entsprechender lithographischen Prozeßen bzw. Planartechnologie erfolgen. Mit nur einer Oberflächenerzeugungseinrichtung können über die Frequenzabhängigkeit verschiedene Bereiche der aktiven Fläche mit der Oberflächenwelle beschickt werden. Zum Überstreichen einer aktiven Fläche ist also ein einzelnes Paar aus Oberflächenwellenerzeugungseinrichtung und Oberflächenwellenempfangseinrichtung ausreichend. Die Konstruktion ist also sehr einfach und kostengünstig herzustellen. Die Steuerung des Ortsbereiches, in dem sich die Oberflächenwelle ausbreiten soll, durch die Frequenz ist zu dem messtechnisch sehr einfach realisierbar.

Die erfindungsgemäße Vorrichtung und das erfindungsgemäße Verfahren zur ortsaufgelösten Detektion einer äußeren Größe eignen sich für alle äußeren Größen, die die Ausbreitung der Oberflächenwelle beeinflussen. Als besonders geeignet hat sich die Erfindung zur ortsaufgelösten Detektion von lokalen Magnetfeldern, lokaler Beleuchtung, lokaler Erwärmung und/ oder lokaler mechanischer Belastung erwiesen. Die Wechselwirkung kann dabei zwischen der Oberflächenwelle und freien Ladungsträgern in dem Substrat erfolgen.

Eine lokale mechanische Belastung kann z. B. ein Druck sein, der von einem nadelförmigen Körper auf das Substrat aufgebracht wird. Eine andere Anwendung ergibt sich aus der Positionierung von Mikrobauteilen auf Substraten. Das Substrat kann eine erfindungsgemäße Vorrichtung umfassen, die eine aktive Fläche hat, innerhalb der ein Mikrobauteil auf dem Substrat positioniert werden soll. Das Mikrobauteil wird dann auf das Substrat aufgebracht und übt eine lokale mechanische Belastung aus. Diese läßt sich mit Hilfe der erfindungsgemäßen Vorrichtung detektieren und so die genaue Position des Mikrobauteils feststellen bzw. überprüfen. Eine solche Anwendung ist besonders bei der Integration von mechanischen und/oder optischen und/oder elektrischen Bauteilen auf Substraten vorteilhaft. Zum Beispiel läßt sich die genaue Position eines Mikrospiegels auf einem Substrat für die Optoelektronik bestimmen.

Die Wechselwirkung mit der äußeren Größe führt zu einer Dämpfung der Oberflächenwelle oder zu einer Änderung der Schallgeschwindigkeit. Aus der Frequenz, bei der diese Dämpfung bzw. die Änderung der Schallgeschwindigkeit nachgewiesen wird, kann dann auf den Ort der Wechselwirkung zurückgeschlossen werden.

Eine andere vorteilhafte Ausgestaltung nutzt die erfindungsgemäße Vorrichtung bzw. das erfindungsgemäße Verfahren zum Nachweis eines lokalen Massebelages. Dazu ist ein Teil der aktiven Fläche derart funktionalisiert, daß er chemisch oder physikalisch mit äußeren Reagenzien reagiert. Der Massebelag verändert dann ebenfalls die Ausbreitungseigenschaften der Oberflächenwelle.

Der frequenzabhängige Ausbereitungsbereich der Oberflächenwellen läßt sich bei einer erfindungsgemäßen Vorrichtung z. B. durch eine Anzahl von Oberflächenwandlern erreichen, die bei verschiedenen Frequenzen arbeiten und so angeordnet sind, daß sie unterschiedliche Bereiche der aktiven Fläche mit Oberflächenwellen überstreichen. Dies läßt sich z. B. mit einer Anordnung von Interdigitaltransducern erreichen, die einen unterschiedlichen Fingerabstand aufweisen und so zur Generierung von Oberflächenwellen verschiedener Frequenz geeignet sind. Entsprechend ist eine Vielzahl von daran angepaßten Interdigitaltransducern auf dem Substrat zum Empfang der Oberflächenwellen vorgesehen.

Der frequenzabhängige Ausbreitungsbereich der Oberflächenwellen läßt sich auch durch einen Oberflächenwellenwandler erreichen, der je nach eingespeistem Hochfrequenzsignal an einer anderen Stelle entlang seiner Achse eine akustische Oberflächenwelle generiert.

Als besonders vorteilhaft hat sich der Einsatz von getaperten Interdigitalwandlern erwiesen. Der frequenzbestimmende Fingerabstand derartiger getaperter Interdigitalwandler ändert sich entlang der Achse des Oberflächenwellenwandlers. Die Wellenlänge einer Oberflächenwelle ist in 0. Näherung gleich dem Quotienten aus Schallgeschwindigkeit und Frequenz der Oberflächenwelle. Wird bei bekannter Schallgeschwindigkeit die in den getaperten Interdigitalwandler eingekoppelte Frequenz festgelegt, wird die Oberflächenwelle nur in einem räumlichen Bereich abgestrahlt, in dem der Abstand der einzelnen Finger des getaperten Interdigitalwandlers der Wellenlänge entspricht. Auf diese Weise läßt sich der räumliche Ausbreitungsbereich der Oberflächenwelle sehr genau festlegen.

Den getaperten Interdigitalwandler zur Erzeugung der Oberflächenwellen stehen entsprechende getaperte Interdigitalwandler zum Empfang der Oberflächenwellen nach Durchlaufen der aktiven Fläche gegenüber.

Der frequenzbestimmende Fingerabstand des Interdigitalwandlers kann sich linear vergrößern oder aber einer komplizierteren Funktion folgen, um in den gewissen Ortsbereichen eine größere oder kleinere Auflösung zu erreichen. Schließlich ist es auch möglich, daß sich der Fingerabstand in Stufen verändert.

Bei einer Vorrichtung mit einer Einrichtung zur Erzeugung von Oberflächenwellen und einer entsprechenden Empfangseinrichtung läßt sich in einer Dimension der Ausbreitungsbereich der Oberflächenwelle frequenzabhängig steuern. Eine Vorrichtung, in der zwei Erzeugungseinrichtungen und zwei zugeordnete Empfangseinrichtungen vorgesehen sind, die Oberflächenwellen den unterschiedlichen Raumrichtungen erzeugen, kann eine aktive Fläche von jeder Erzeugungseinrichtung überstrichen werden. So läßt sich die aktive Fläche zweidimensional ausmessen und eine zweidimensionale Ortsauflösung ist möglich.

Dabei kann vorgesehen sein, daß zuerst die eine Erzeugungseinrichtung frequenzabhängig Oberflächenwellen erzeugt und die Wechselwirkung dieser Oberflächenwellen bei verschiedenen Frequenzen mit der äußeren Größe nachgewiesen wird und im Anschluß daran gleichermaßen die zweite Erzeugungseinrichtung Oberflächenwellen frequenzabhängig erzeugt.

Besonders vorteilhaft ist es, wenn sich die Frequenzbereiche, in denen die Erzeugungseinrichtungen ortsabhängig Oberflächenwellen erzeugen, nicht überdecken. So kann in einem einzelnen Frequenzsweep zunächst die eine Raumrichtung der aktiven Flache auf eine Wechselwirkung mit der äußeren Größe untersucht werden und dann die andere Raumrichtung.

Bei einer besonderen Ausführungsform eines erfindungsgemäßen Verfahrens bzw. einer erfindungsgemäßen Vorrichtung ist vorgesehen, daß durch Verwendung mindestens einer weiteren Vorrichtung die lokale Wechselwirkung mit einer äußeren Größe drahtlos funkabgefragt werden kann.

Besonders vorteilhaft läßt sich die erfindungsgemäße Vorrichtung einsetzen, wenn eine Antenne zur Einkoppelung eines Frequenzsignales in die Erzeugungseinrichtung zur Erzeugung einer Oberflächenwelle vorgesehen ist. Auf diese Weise kann die Erzeugungseinrichtung drahtlos angesprochen werden. ist die Empfangseinrichtung für die Oberflächenwelle mit einer Sendereinheit verbunden, z. B. ebenfalls eine Antenne, so läßt sich das Signal drahtlos abfragen.

Eine solche Vorrichtung läßt sich also vollständig drahtlos abfragen, was in Meßsituationen von großem Vorteil ist, in die keine äußeren Elemente eingeführt werden sollen. Dies kann z.B. bei Anwendungen der Fall sein, die hohen Hygieneanforderungen genügen müssen oder, wenn die Vorrichtung bzw. das Verfahren für eine Messung im Hochvakuum eingesetzt werden soll.

Werden mehrere erfindungsgemäße Vorrichtungen an verschiedenen Stellen eingesetzt, ist es vorteilhaft, wenn die drahtlose Funkübertragung auch eine Identifizierung der einzelnen Vorrichtungen ermöglicht. Dies kann z.B. durch entsprechende Codierungsmittel zur Identifizierung der jeweiligen Funkabfragbarkeit der Vorrichtung erreicht werden.

Die zur Funkabfrage eingesetzte Frequenz kann dabei direkt jeweils der Frequenz entsprechen, die an die Erzeugungseinrichtung angelegt wird, um die Oberflächenwellen ortsabhängig zu erzeugen.

Die Oberflächenwelle wird durch die Wechselwirkung mit der äußeren Größe in ihren Ausbreitungseigenschaften geändert. Ausgewertet werden kann z.B. die Änderung der Phase, der Intensität oder der Laufgeschwindigkeit bei der jeweils eingestrahlten Frequenz.

Mit der erfindungsgemäßen Vorrichtung läßt sich z. B. ein Miniaturspekthometer oder ein Kameraelement realisieren.

Sind auf einer erfindungsgemäßen Vorrichtung mehrere Erzeugungseinrichtungen für Oberflächenwellen mit entsprechenden Empfangseinrichtungen vorgesehen, die unter verschiedenen Winkeln Oberflächenwellen durch die aktive Fläche schicken, so kann nicht nur die Lage, sondern auch die Form der Wechselwirkungszone vermessen werden. Dabei können Bildverarbeitungsprozesse zum Einsatz kommen, wie sie aus der Tomographie bekannt sind. Jedes Oberflächenwellenwandlerpaar erzeugt ein Schattenbild der Wechselwirkungszone. Mit entsprechender Bildverarbeitungssoftware läßt sich damit die Form der Wechselwirkungszone errechnen. Dies ist z. B. auch vorteilhaft, wenn die Wechselwirkungszone aus mehreren einzelnen nicht miteinander zusammenhängenden Unterzonen besteht.

Ein ähnlicher Effekt läßt sich erreichen, wenn die Wechselwirkungszone zunächst in einer Richtung mit einer Oberflächenwelle beschickt wird und das entsprechende Signal aufgenommen wird. Im Anschluß daran wird die Vorrichtung um einen Winkel in der Ebene der Oberflächenwelle verdreht, ohne daß sich die Form oder Lage der Wechselwirkungszone im Raum verändert. Im Anschluß daran wird eine weitere Detektionsmeßung durchgeführt. Die Oberflächenwellen der zweiten Detektionsmeßung durchlaufen den aktiven Bereich dann in einer anderen Richtung. So wird der gleiche Effekt erzielt, als wenn mehrere Transducerpaare auf der Vorrichtung vorgesehen sind, die die aktive Fläche aus verschiedenen Richtungen mit Oberflächenwellen beschicken.

Die Erfindung wird anhand bevorzugter Ausführungsformen mit Hilfe der anliegenden Figuren näher erläutert. Dabei zeigt:

Fig. 1　　die prinzipielle Funktionsweise eines getaperten interdigitalen Transducers,

Fig. 2a　　die schematische Ansicht eines erfindungsgemäße eindimensionalen Detektors,

Fig. 2b　　ein Beispiel der frequenzabhängigen relativen Phasenänderung beim Einsatz einer erfindungsgemäßen Ausführungsform der Fig. 2a,

Fig. 2c　　das frequenzabhängige Phasensignal der Vorrichtung gemäß Fig. 2a mit und ohne Wechselwirkung,

Fig. 3a　　eine weitere Ausführungsform der erfindungsgemäßen Vorrichtung

Fig. 3b　　ein Beispiel der frequenzabhängigen Transmission der Anordnung nach Fig. 3a, und

Fig. 4　das Beispiel einer Anwendung einer erfindungsgemäßen Vorrichtung nach Fig. 3a.

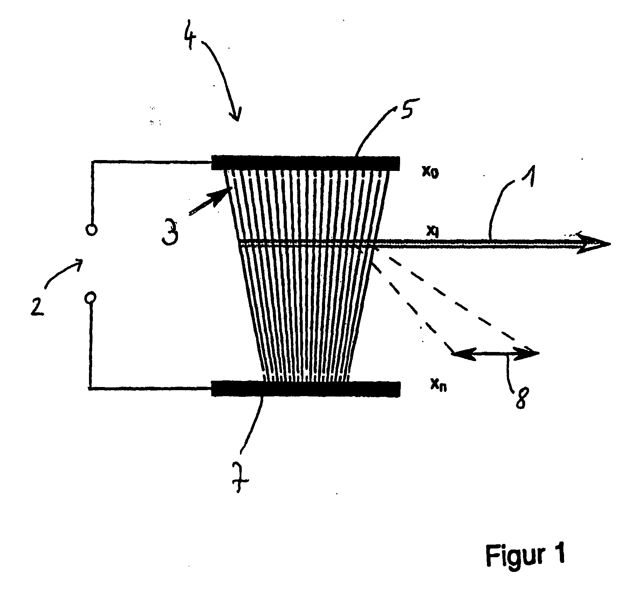

In Fig. 1 ist schematisch ein sogenannter getaperter interdigitaler Transducer 4 dargestellt, der sich z. B. auf einem piezoelektrischen Substrat befindet. Er besteht aus Elektroden 5, 7, die fingerartige Fortsätze haben. Im Bereich 3 greifen die fingerartigen Fortsätze der Elektroden 5 und 7 ineinander. Über die Zuführung 2 kann eine Spannung mit gewünschter Frequenz an die Elektroden 5 und 7 angelegt werden. Der Abstand 8 der einzelnen Finger ändert sich bei gezeigtem Beispiel linear von der Position $X_0$ zur Position $X_n$. Abweichend von der gezeigten linearen Änderung kann auch eine kompliziertere Funktion der Abstandsänderung vorgesehen sein.

Zwischen der Frequenz $f_i$ und der Wellenlänge $\lambda_i$ einer Oberflächenwelle besteht in 0. Näherung der Zusammenhang:

$$f_i = v_s/\lambda_i.$$

Eine Oberflächenwelle mit der Wellenlänge $\lambda_i$ wird an einem Ort $X_i$ angeregt, an dem der Fingerabstand gerade der Wellenlänge entspricht. Bei konstanter Schallgeschwindigkeit $v_s$ wird also durch die Frequenz des über den Anschluß 2 eingekoppelten Hochfrequenzsignales der Ort $X_i$ der Abstrahlung der Oberflächenwelle 1 festgelegt.

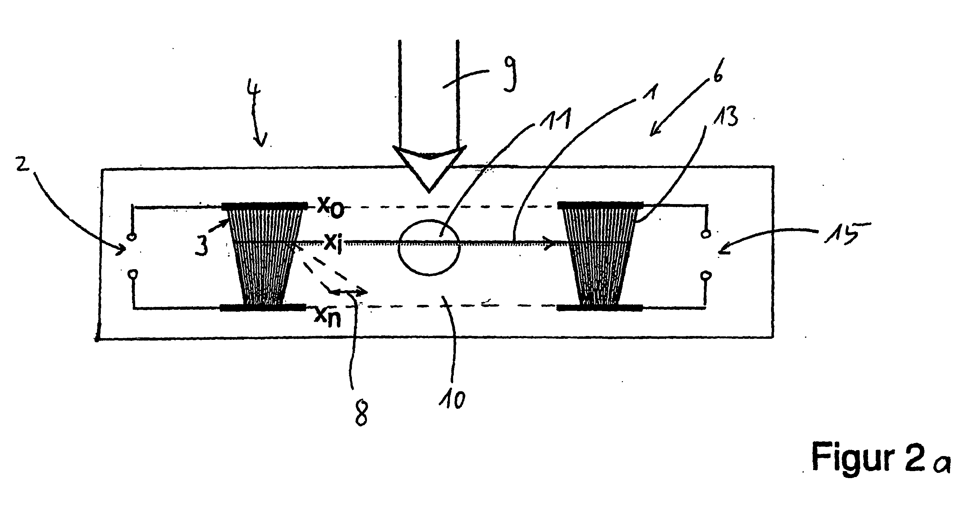

In Fig. 2a ist ein erfindungsgemäßer linearer, eindimensionaler Lichtsensor schematisch gezeigt. 4 bezeichnet den Interdigitaltransducer, der zur Erzeugung der Oberflächenwelle 1 dient, wie in Fig. 1 beschrieben. 6 bezeichnet den Interdigitaltransducer, der zum Empfang der Oberflächenwellen 1 dient. Auch der Interdigitaltransducer 6 umfaßt in einen Bereich 13 ineinander greifende fingerartige Elektroden, die zur Detektion der Oberflächenwellen 1 dienen. In dem Bereich, in dem der Abstand der einzelnen Finger des Interdigitaltransducers 6 der Wellenlänge der einkommenden Oberflächenwelle entspricht, wird ein Signal mit der Frequenz gemäß der obigen Formel angeregt. Dieses Signal kann an de Anschlüssen 15 abgegriffen werden und zur Auswertung weitergeleitet werden.

In Fig. 2a ist mit 10 der Bereich gezeigt, der mit Hilfe des Interdigitaltransducers 4 mit Oberflächenwellen frequenzabhängig überstrichen werden kann. Dies entspricht dem aktiven Bereich. 11 bezeichnet einen Lichtpunkt, der die Beleuchtung 9 erzeugt wird.

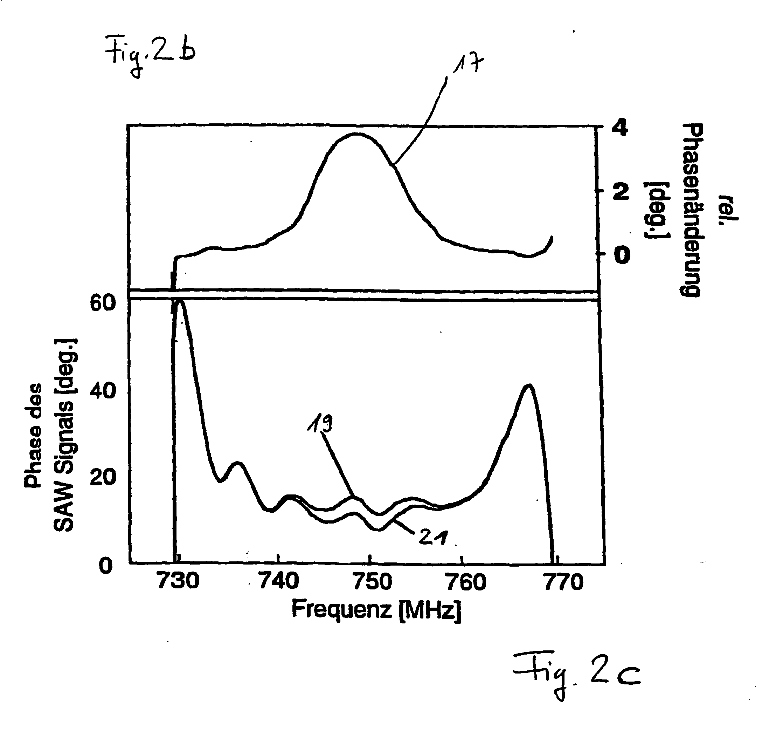

Figuren 2b und 2c zeigen Signale, die wie folgt erhalten werden können.

Zwischen den beiden Interdigitaltransducem 4 und 6 wird das Sensorelement lokal beleuchtet. Bei einem halbleitenden Substrat erzeugen die einfallenden Photonen freie Ladungsträger in dem beleuchteten Bereich, die ihrerseits mit Oberflächenwellen wechselwirken und dadurch deren Ausbreitungseigenschaften lokal ändern. Im wesentlichen nur diejenigen Oberflächenwellen, die den Wechselwirkungsbereich 11 durchlaufen, werden auch in ihren Ausbreitungseigenschaften beeinflußt. In der Übertragungsfunktion der beiden Interdigitaltransducer äußert sich diese lokale Wechselwirkung als deutlicher Einbruch in der transmittierten Intensität. Da der Ort $X_i$ der erzeugten Oberflächenwelle von der eingestrahlten Frequenz abhängt, wird nur eine Oberflächenwelle bestimmter Frequenz durch die Beleuchtung beeinflußt. Eine Frequenz, die einem Ort $x_j$ entspricht, der zu einer Ausbreitung einer Oberflächenwelle führt, die nicht durch den Wechselwirkungsbereich 11 geht, wird nicht beeinflußt.

Wird die Frequenz während eines Meßzyklus geändert, so ändert sich dementsprechend der Ausbreitungsort der Oberflächenwellen von $x_0$ zu $x_n$. Die so generierte Oberflächenwelle verschiedener Frequenz bzw. Wellenlänge überstreicht unter anderem den Wechselwirkungsbereich 11.

In Fig. 2c zeigt die Kurve 19 die Phase der Oberflächenwellen, die bei verschiedenen Frequenzen von den Interdigitaltransducern 4 und 6 meßbar ist. Einschalten einer Beleuchtung 9 führt zu einer Wechselwirkung der Oberflächenwellen mit der Beleuchtung in dem beleuchteten Bereich 11. In dem Frequenzbereich, der dem beleuchteten Ortsbereich entspricht, wird die Phase der Oberflächenwelle verändert, wie es sich in der Kurve 21 der Fig. 2c äußert.

Fig. 2b zeigt die relative Phasenänderung, die sich aus den Kurven 19 und 21 der Fig. 2c errechnen läßt. In dieser Darstellung ist deutlich zu erkennen, daß bei einer Frequenz von ca. 750 MHz durch das Beleuchten eine Phasenänderung stattgefunden hat. Die Frequenz 750 MHz läßt sich nach oben angegebener Formel in einen Ort umrechnen, so daß zumindest in einer Raumrichtung der Ort der Beleuchtung bestimmt werden kann.

Eine mögliche Anwendung einer solchen Vorrichtung ist z.B. ein Spektrometer. Ein Spektrometer dient der frequenz- bzw. wellenlängenabhängigen Ablenkung von Licht. Aus der Ortsablenkung läßt sich dementsprechend auf die Energie des eingestrahlten Lichtes zurückschließen. Die Ortsablenkung kann mit Hilfe des erfindungsgemäßen Sensorelementes in einem sehr kleine Ortsbereich bestimmt werden. Aus der Frequenz, bei der eine Phasenänderung der Oberflächenwelle detektiert wird, kann auf den Ort des Lichteinfalles zurückgeschlossen werden. Aus dem Ort des Lichteinfalles kann andererseits auf die Frequenz, bzw. Wellenlänge des einfallenden Lichtes geschlossen werden.

Ein solches Sensorelement ist z.B. in sehr kleinen miniaturisierten Experimenten vorteilhaft. Dazu kann das Sensorelement auch mit einem Spektrometerelement auf einer Substratstruktur integriert werden. Ist das Sensorelement funkabfragbar ausgestaltet, kann z.

B. das Spektrum eines brennenden Gases für die Umwettsensorik überwacht werden.

Anstelle der lokalen Beleuchtung 9 kann z. B. auch ein lokales Magnetfeld angelegt werden, eine lokale Erwärmung des Substrates innerhalb der aktiven Fläche 10 nachgewiesen werden oder eine mechanische Belastung in einem sehr begrenzten Raumbereich. So läßt sich z.B. eine "Mikrotouchscreen" realisieren. Ein lokaler Massebelag kann z.B. durch lokale chemische Reaktionen in einem Wechselwirkungsbereich 11 des aktiven Bereiches 10 nachgewiesen werden.

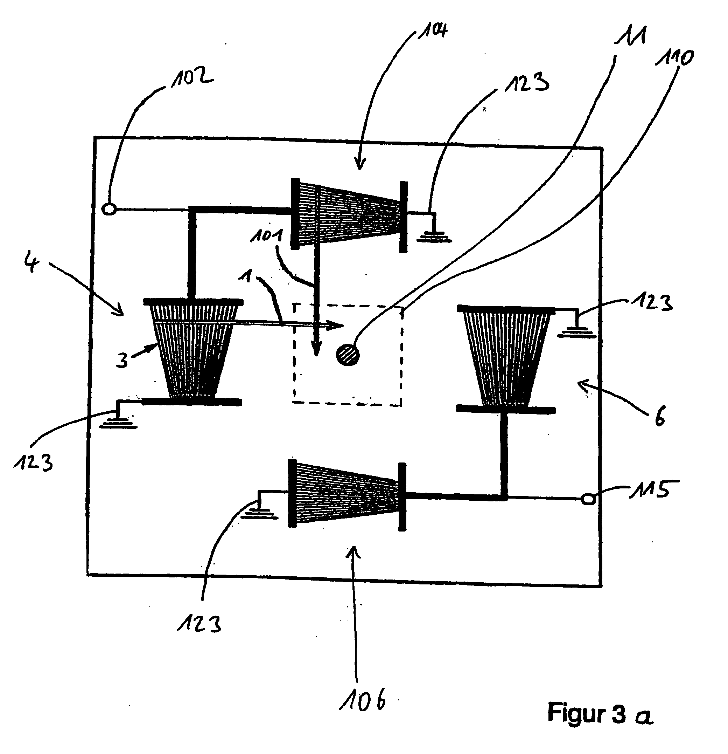

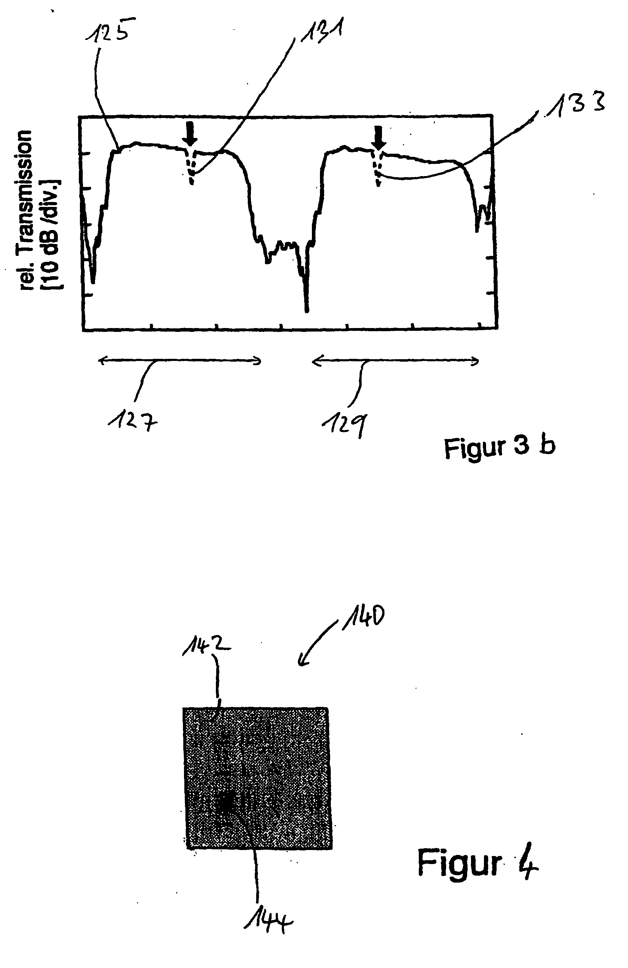

Fig. 3a zeigt eine weitere beispielhafte Ausführungsform. Hier sind zwei interdigitale Transducerpaare 4, 6 bzw. 104, 106 vorgesehen. Das Transducerpaar 4, 6 dient der Erzeugung und dem Nachweis von Oberflächenwellen 1, während das Transducerpaar 104, 106 der Erzeugung und dem Nachweis von Oberflächewellen 101 dient. Beide Transducerpaare sind, wie mit Bezug zu Fig. 1 beschrieben, sogenannte getaperte Interdigitaltransducer.

Je nach eingekoppelter Frequenz werden jeweils die Oberflächenwellen an anderer Stelle des entsprechenden Transducers 4, 104 erzeugt. Bei sich ändernder Frequenz wird also jeweils der aktive Bereich 110 überstrichen. Ein Wechselwirkungsbereich 11, z.B. ein Lichtpunkt läßt sich also zweidimensional lokalisieren. Die gezeigte Ausführungsform ist dergestalt, daß die Fingerabstände des Interdigitaltransducers 4 keine Entsprechung in den Fingerabständen des Interdigitaltransducers 104 haben. Die nutzbaren Frequenzbereiche der zwei Interdigitaltransducer 4, 104 überdecken sich also nicht. Wird an dem Anschluß 102 ein Frequenzsweep gegenüber dem Masseanschluß 123 durchgeführt, so wird zunächst der eine Transducer 4 eine Oberflächenwelle 1 erzeugen, deren Ort sich mit der Frequenz ändert. Bei höherer Frequenz, die den Frequenzbereich des Interdigitaltransducers 104 entspricht, erzeugt dieser frequenzabhängig Oberflächenwellen an verschiedenem Ort. Entsprechend sind die Empfangstransducer 6 und 106 ausgestaltet. Deren Ausgangssignal 115 gegen den Masseanschluß 123 entspricht also zuerst der Überstreichung des aktiven Bereiches 110 in vertikaler Richtung und bei höherer Frequenz der Überstreichung des Maßbereiches 110 in horizontaler Richtung.

Dies ist in Fig. 3b erkennbar, die die relative Transmission der Oberflächenwellen zeigt. Die Frequenz steigt daher von links nach rechts an. Die Kurve 125 zeigt einen plateauartigen Bereich 127 bei niedrigeren Frequenzen, die dem Frequenzbereich des Transducers 4 entspricht. Der plateauartige Bereich 129 bei höheren Frequenzen entspricht dem nutzbaren Frequenzbereich des Transducers 104 bzw. 106. Die Transmissionseinbrüche 131 und 133 entstehen durch die Wechselwirkung der jeweiligen Oberflächenwelle mit der äußeren Beleuchtung in dem Wechselwirkungsbereich 11. Daraus läßt sich auf die Lage des Beleuchtungspunktes 11 zurückschließen. Dies kann z.B. durch entsprechende Rechnerunterstützung geschehen.

Fig. 4 zeigt eine rechnergestützte Auswertung des Signales der Fig. 3b. Gezeigt ist das bildverarbeitete Signal 140, das aus der Frequenzabhängigkeit der relativen Transmission errechnet worden ist. Dabei entspricht das Feld 142 dem aktiven Bereich 110 der Fig. 3a. Deutlich ist bei 144 die Abnahme der Transmission der Oberflächenwellen in den beiden Raumrichtungen zu erkennen, die dem Lichtpunkt 11 entspricht. So läßt sich eine Kamerafunktion realisieren.

Kompliziertere Formen der Wechselwirkungszone lassen sich mit mehreren Transducerpaaren vermessen oder durch mehrere Messungen, bei denen die Ausrichtung der gesamten Vorrichtung gegenüber der Wechselwirkungszone verändert worden ist. Eine Auswertung kann ähnlich wie bei tomographischen Bildverarbeitungsverfahren durchgeführt werden um die Form der Wechselwirkungszone zu bestimmen. So läßt sich z.B. auch eine Wechselwirkungszone vermessen, die aus mehreren unabhängigen Unterzonen besteht, z. B. eine Beleuchtung mit mehreren Lichtpünkten.

Die Trennung der Transducerpaare 4, 104 bzw. 6, 106 für die Abfrage der verschiedenen Raumrichtungen kann abweichend von der Frequenzcodierung auch dadurch geschehen, daß eines der Transducerpaare einen kleineren Abstand zueinander hat. So entsteht ein Laufzeitunterschied zwischen den verschiedenen Transducerpaaren, die zur Identifizierung des Transducerpaares dienen kann.

Selbstverständlich kann auch ein lokaler Massebelag, ein lokales Magnetfeld, eine lokale mechanische Belastung oder eine lokale Erwärmung in dem Wechselwirkungsbereich 11 nachgewiesen werden, wenn diese äußere Größe zu einer Änderung der Ausbreitungseigenschaften der Oberflächenwellen führt.

So läßt sich z.B. ein sehr kleiner chemischer Sensor realisieren oder eine "Mikrotouchscreen". In der zweidimensionalen Ausgestaltung der Fig. 3a ist das Element z.B. auch nach Art einer Quadrantenphotodiode einsetzbar.

Mit der erfindungsgemäßen Vorrichtung bzw. dem erfindungsgemäßen Verfahren läßt sich bei einfacher Konstruktion und einer Vielzahl von Anwendungsmöglichkeiten also eine sehr feine ortsaufgelöste Detektion einer äußeren Größe durchführen. Bei Verwendung von Interdigitaltransducem als Oberflächenwellenwandler ist die Realisation der Funkabfragbarkeit sehr einfach realisierbar. Die relative Unabhängigkeit der Funktionsweise von der Wahl des verwendeten Ausgangsmateriales erlaubt darüber hinaus eine Vielfalt denkbarer möglicher Einsatzmöglichkeiten.

**Patentansprüche**

1. Vorrichtung zur ortsaufgelösten Detektion einer äußeren Größe, mit

einem Substrat,

- mindestens einer Erzeugungseinrichtung (4, 104) auf dem Substrat zur Erzeugung akustischer Oberflächenwellen durch Anlegen einer Eingangsfrequenz,

- mindestens einer aktiven Fläche (10, 110), die durch mindestens eine Erzeugungseinrichtung (4, 104) mit akustischen Oberflächenwellen beschickt werden kann, zur Wechselwirkung mit einer äußeren Größe,

- mindestens einer Empfangseinrichtung (6, 106) auf dem Substrat zum Empfang der Oberflächenwelle nach Durchlaufen der aktiven Fläche (10, 110),

- wobei die mindestens eine Erzeugungseinrichtung (4, 104) derart ausgestattet ist, daß sich der Ausbreitungsbereich der jeweiligen Oberflächenwelien (1, 101) innerhalb der jeweiligen aktiven Fläche (10, 110) mit der Höhe der Eingangsfrequenz ändert.

2. Vorrichtung zur ortsaufgelösten Detektion einer äußeren Größe nach Anspruch 1, wobei die äußere Größe ein lokales Magnetfeld, eine lokale Beleuchtung (9, 11), eine lokale Erwärmung und/oder eine lokale mechanische Belastung des Substrates umfaßt.

3. Vorrichtung zur ortsaufgelösten Detektion einer äußeren Größe nach Anspruch 1, bei der zumindest ein Teil des Substrates derart funktionalisiert ist, daß er chemisch oder physikalisch mit äußeren Reagenzien in Form eines Massebelages reagieren kann.

4. Vorrichtung zur ortsaufgelösten Detektion einer äußeren Größe nach einem der Ansprüche 1 bis 3, bei der die mit den akustischen Oberflächenwellen (1, 101) wechselwirkende Größe durch lokale Ladungen in mindestens einem Teil des Substrates vermittelt wird.

5. Vorrichtung zur ortsaufgelösten Detektion einer äußeren Größe nach einem der Ansprüche 1 bis 4, wobei die mindestens eine Erzeugungseinrichtung (4, 104) einen Oberflächenwellenwandler umfaßt, bei dem sich mit dem eingespeisten Hochfrequenzsignal entlang seiner Achse der Ort der Oberflächenwellenabstrahlung ändert.

6. Vorrichtung zur ortsaufgelösten Detektion einer äußeren Größe nach Anspruch 5, bei der der Oberflächenwellenwandler zur Erzeugung einer akustischen Oberflächenwelle (1, 101) einen getaperten Interdigitalwandler (3) umfaßt, bei dem der frequenzbestimmende Fingerabstand (8) entlang der Achse des Oberflächenwellenwandlers nicht konstant ist.

7. Vorrichtung zur ortsaufgelösten Detektion einer äußeren Größe nach Anspruch 6, bei dem die mindestens eine Empfangseinrichtung (6, 106) einen zweiten Oberftächenwettenwandter umfaßt, der als getaperter Interdigitalwandler (13) ausgeführt ist, bei dem der frequenzbestimmende Fingerabstand entlang der Achse des Oberflächenwelienwandiers nicht konstant ist.

8. Vorrichtung zur ortsaufgelösten Detektion einer äußeren Größe nach einem der Ansprüche 1 bis 7 mit mindestens zwei Erzeugungseinrichtungen (4, 104), wobei die jeweiligen aktiven Flächen (10, 110) sich zumindest teilweise überdecken und die mindestens zwei Erzeugungseinrichtungen (4, 104) derart angeordnet sind, daß sie den Überdeckungsbereich mit Oberflächenwellen aus unterschiedlichen Richtungen beschicken können und

- mindestens zwei Empfangseinrichtungen (6, 106) auf dem Substrat zum Empfang der jeweiligen Oberflächenwellen nach Durchlaufen der jeweiligen aktiven Fläche (10, 110).

9. Vorrichtung zur ortsaufgelösten Detektion einer äußeren Größe nach Anspruch 8 insoweit er von Anspruch 7 abhängig ist, bei der die Größenbereiche der jeweiligen örtlich sich ändernden Fingerabstände der mindestens zwei Erzeugungseinrichtungen keine gemeinsamen Werte haben.

10. Vorrichtung zur ortsaufgelösten Detektion einer äußeren Größe nach einem der Ansprüche 1 bis 9 mit einer Funkempfangseinrichtung zum Empfang einer Funkfrequenz zur frequenzabhängigen Einkoppelung in die mindestens eine Erzeugungseinrichtung (4, 104) und einer zweiten Einrichtung zur Abstrahlung eines Frequenzsignales in Abhängigkeit des von der Empfangseinrichtung (6, 106) zum Empfang der Oberflächenwellen (1, 101) nach Durchlaufen der aktiven Fläche (10, 110) erhaltenen Signals,
derart, daß die Vorrichtung funkabgefragt werden kann.

11. Vorrichtung zur ortsaufgelösten Detektion einer äußeren Größe nach Anspruch 10 mit Kodierungsmitteln zur Identifizierung der funkabfragbaren Vorrichtung.

12. Spektrometeranordnung mit einem Element zur wellenlängenabhängigen Ablenkung eines Lichtstrahles und einer Vorrichtung zur ortsaufgelösten Detektion gemäß einem der Ansprüche 1 bis 11 zur Detektion der Ablenkungsrichtung des Lichtstrahles.

13. Abbildungseinrichtung mit
einer Vorrichtung nach einem der Ansprüche 1 bis 11, und

- einer Auswerteeinrichtung zur Umsetzung des Ausgangssignales der Vorrichtung in ein Abbild der aktiven Fläche (10, 110) unter Einflüß der äußeren Größe mittels Bildverarbeitungsverfahren.

14. Verfahren zur ortsaufgelösten Detektion einer äußeren Größe, bei dem.

- akustische Oberflächenwellen (1, 101) in zumindest einer Richtung über einen aktiven Bereich (10, 110) eines Substrates geschickt und detektiert werden, wobei Oberflächenwellen verschiedener Frequenzen jeweils verschiedene Bereiche der aktiven Fläche (10, 110) durchlaufen,

- zumindest ein Teil der aktiven Fläche (10, 110) lokal mit der äußeren Größe in Wechselwirkung gebracht wird, und

- eine Änderung von Parametern der Oberflächenwellen (1, 101) durch diese Wechselwirkung nachgewiesen wird.

15. Verfahren zur ortsaufgelösten Detektion einer äußeren Größe nach Anspruch 14, wobei die äußere Größe ein lokales Magnetfeld, eine lokale Beleuchtung (9, 11) des Substrats, eine lokale mechanische Belastung des Substrates und/oder eine lokale Erwärmung des Substrates umfaßt.

16. Verfahren zur ortsaufgelösten Detektion einer äußeren Größe nach Anspruch 14. bei dem zumindest ein Teil des Substrates derart funktionalisiert worden ist, daß er chemisch oder physikalisch mit äußeren Reagenzien reagieren kann und die äußere Größe einen Massebelag umfaßt.

17. Verfahren zur ortsaufgelösten Detektion einer äußeren Größe nach einem der Ansprüche 14 bis 16, bei dem die äußere Größe durch lokale Ladungen in dem Substrat vermittelt wird.

18. Verfahren zur ortsaufgelösten Detektion einer äußeren Größe nach einem der Ansprüche 14 bis 17, bei dem die durch die Wechselwirkung mit der äußeren Größe geänderte Phase der Oberflächenwelle (1, 101) bei der jeweiligen Eingangsfrequenz ausgewertet wird.

19. Verfahren zur ortsaufgelösten Detektion einer äußeren Größe nach einem der Ansprüche 14 bis 18, bei dem die Intensitätsänderung der Oberflächenwelle durch die Wechselwirkung mit der äußeren Größe bei der jeweiligen Eingangsfrequenz ausgewertet wird.

20. Verfahren zur ortsaufgelösten Detektion einer äußeren Größe nach einem der Ansprüche 14 bis 19, bei dem die Laufzeitänderung der Oberflächenwelle (1, 101) durch die Wechselwirkung mit der äußeren Größe bei der jeweiligen Eingangsfrequenz ausgewertet wird.

21. Verfahren zur ortsaufgelösten Detektion einer äußeren Größe nach einem der Ansprüche 14 bis 20, bei dem die Eingangsfrequenz während eines Messzyklus derart geändert wird, daß durch die Änderung der Eingangsfrequenz in einem Meßzyklus die gesamte aktive Fläche (10, 110) des Substrates von Oberflächenwellen durchlaufen wird.

22. Verfahren nach einem der Ansprüche 14 bis 21, bei dem Oberflächenwellen (1, 101) aus verschiedenen Richtungen durch den aktiven Bereich (10, 110) geschickt werden.

23. Verfahren zur ortsaufgelösten Detektion einer äußeren Größe nach Anspruch 22, bei dem die Oberflächenwellen (1, 101) aus verschiedenen Richtungen zu keinem Zeitpunkt gleiche Frequenz haben.

24. Verfahren zur ortsaufgelösten Detektion einer äußeren Größe nach einem der Ansprüche 22 oder 23, bei dem die gemessenen Signale mit tomographischen Bitdverarbeitungsverfahren ausgewertet werden.

25. Verfahren zur ortsaufgelösten Detektion einer äußeren Größe nach einem der Ansprüche 14 bis 24, bei dem die akustischen Oberflächenwellen (1, 101) durch Einstrahlen einer Funkfrequenz in eine Antenne in Verbindung mit mindestens einer Erzeugungseinrichtung (4, 104) zur Erzeugung der akustischen Oberflächenwellen (1,101) erzeugt werden, und
die akustischen Oberflächenwellen (1, 101 ) von einer Empfangseinrichtung (6, 106) empfangen werden, die einen Sender umfaßt, der ein Frequenzsignal abstrahlt,
so daß die ortsaufgelöste Detektion drahtlos abgefragt werden kann.

26. Verfahren zur ortsaufgelösten Detektion einer äußeren Größe nach Anspruch 25, bei dem zusätzlich eine Identifizierungskodierung drahtlos übermittelt wird.

**27.** Verfahren zur ortsaufgelösten Detektion einer äußeren Größe nach einem der Ansprüche 14 bis 26 mit einer Vorrichtung nach einem der Ansprüche 1 bis 11.

## Claims

**1.** Device for high-sensitivity resolution detection of an external variable with a substrate, comprising

- at least one generating device (4, 104) on the substrate for generating acoustic surface waves by application of an input frequency,

- at least one active area (10, 110) that can be covered with acoustic surface waves by at least one generating device (4, 104) for interaction with an external variable,

- at least one receiving device (6, 106) on the substrate to receive the surface waves after their passage through the active area (10, 110),

- wherein the at least one generating device (4, 104) is designed in such manner that the propagation range of the surface waves in question (1, 101) within the respective active area (1, 110) changes with the value of the input frequency.

**2.** Device for high-sensitivity resolution detection of an external variable according to claim 1, in which the external variable includes a local magnetic field, local illumination (9, 11), local heating, and/or local mechanical stress of the substrate.

**3.** Device for high-sensitivity resolution detection of an external variable according to claim 1, in which at least one portion of the substrate is functionalized in such manner that it is able to react chemically or physically with external reagents in the form of a mass-overlay.

**4.** Device for high-sensitivity resolution detection of an external variable according to one of claims 1 to 3, in which the variable interacting with the acoustic surface waves (1, 101) is transmitted trough local charges in at least one portion of the substrate.

**5.** Device for high-sensitivity resolution detection of an external variable according to one of claims 1 to 4, in which at least one generating device (4, 104) includes a surface wave transducer in which the position of the surface wave beam input changes with the input high-frequency signal along its axis.

**6.** Device for high-sensitivity resolution detection of an external variable according to claim 5, in which the surface wave transducer for generating an acoustic surface wave (1, 101) includes a tapered interdigital transducer (3) in which the frequency-determining finger interval (8) is not constant along the axis of the surface wave transducer.

**7.** Device for high-sensitivity resolution detection of an external variable according to claim 6, in which at least one receiving device (6, 106) has a second surface wave transducer designed as a tapered interdigital transducer (13), in which the frequency-determining interval is not constant along the axis of the surface wave transducer.

**8.** Device for high-sensitivity resolution detection of an external variable according to one of claims 1 to 7, with at least two generating devices (4, 104) for generating acoustic surface waves (1, 101), in which the respective active areas (10, 110) at least partially overlap, and at least two generating devices (4, 104) positioned in such manner that they can cover the overlapping area with surface waves from different directions and at least two receiving devices (6, 106) on the substrate for receiving the respective surface waves after their passage through the respective active areas (10, 110).

**9.** Device for high-sensitivity resolution detection of an external variable according to claim 8 insofar as it is dependent on claim 7, in which the variable ranges of the respective locally-changing frequency-determining finger intervals (8) of at least two generating devices do not have common values.

**10.** Device for high-sensitivity resolution detection of an external variable according to one of claims 1 to 9 with a radio-receiving device for receiving a radio frequency for frequency-dependent input into at least one generating device (4, 104) and a second device for emitting a frequency signal dependent on the signal received from the receiving device (6, 106) for receiving the surface waves (1, 101) after their passage through the active area (10, 110), in such manner that the device can be radio-scanned.

**11.** Device for high-sensitivity resolution detection of an external variable according to claim 10 with coding components for identifying the radio-scannable device.

**12.** Spectrometer arrangement with a component for wavelength-dependent deflection of a light beam and a device for high-sensitivity resolution detection according to one of claims 1 to 11 for detection of the light-beam deflection direction.

**13.** Imaging device with a device according to one of claims 1 to 11, and an evaluation device for converting the output signal of the device into an image of the active area (10, 110) under the influence of the external variable by means of image processing methods.

**14.** Method for high-sensitivity resolution detection of an external variable, in which

- acoustic surface waves (1, 101) are sent in at least one direction through an active area (10, 110) of a substrate and are detected, whereupon surface waves of different frequencies pass through different areas of the active surface (10, 110),

- at least one part of the active surface (10, 110) is caused to interact locally with the external variable, and

- a change of parameters of the surface waves (1, 101) through this interaction is detected.

**15.** Method for high-sensitivity resolution detection of an external variable according to claim 14, in which the external variable includes a local magnetic field, a local illumination (9, 11) of the substrate, a local mechanical stress of the substrate, and/or a local heating of the substrate.

**16.** Method for high-sensitivity resolution detection of an external variable according to claim 14, in which at least one portion of the substrate is functionalized in such manner that it is able to react chemically or physically with external reagents and the external variable comprises a mass-overlay.

**17.** Method for high-sensitivity resolution detection of an external variable according to one of claims 14 to 16, in which the external variable is transmitted by means of local charges in the substrate.

**18.** Method for high-sensitivity resolution detection of an external variable according to one of claims 14 to 17, in which the surface-wave (1, 101) phase altered by interaction with the external variable is evaluated at the respective input frequency.

**19.** Method for high-sensitivity resolution detection of an external variable according to one of claims 14 to 18, in which the change in intensity of the surface wave caused by the interaction with the external variable is evaluated at the respective input frequency.

**20.** Method for high-sensitivity resolution detection of an external variable according to one of claims 14 to 19, in which the change in the lag time of the surface wave (1, 101) caused by the interaction with the external variable is evaluated at the respective input frequency.

**21.** Method for high-sensitivity resolution detection of an external variable according to one of claims 14 to 20, in which the input frequency during a measuring cycle is changed in such manner that the entire active area (10, 110) of the substrate is covered through the change in input frequency.

**22.** Method according to one of claims 14 to 21, in which surface waves (1, 101) from a variety of directions are passed through the active area (10, 110).

**23.** Method for high-sensitivity resolution detection of an external variable according to claim 22, in which the frequency ranges of the surface waves (1, 101) coming from various directions do not have the same frequency at any time.

**24.** Method for high-sensitivity resolution detection of an external variable according to one of claims 22 or 23, in which the measured signals are evaluated with tomographic image processing methods;

**25.** Method for high-sensitivity resolution detection of an external variable according to one of claims 14 to 24, in which the acoustic surface waves (1, 101) are generated through radiating of a radio frequency into an antenna connected with at least one generating device (4, 104) for generating the acoustic surface waves (1, 101), and the acoustic surface waves (1, 101) are received by a receiving device (6, 106) which includes a transmitter that emits a frequency signal, so that the high-sensitivity resolution detection can be scanned wirelessly.

**26.** Method for high-sensitivity resolution detection of an external variable according to claim 25, in which in addition an identification coding is transmitted wirelessly.

**27.** Method for high-sensitivity resolution detection of an external variable according to one of claims 14 to 26, with a device according to one of claims 1 to 11.

**Revendications**

**1.** Dispositif pour la détection à résolution spatiale d'une grandeur extérieure, comportant un substrat,

- au moins un dispositif de génération (4, 104) déposé sur le substrat pour la génération d'ondes acoustiques de surface par application d'une fréquence d'entrée,

- au moins une surface active (10, 110) pouvant être balayée par des ondes acoustiques de surface générées par au moins un dispositif de génération (4, 104) pour l'interaction avec une grandeur extérieure,

- au moins un dispositif de réception (6, 106) déposé sur le substrat pour la réception de l'onde de surface une fois que celle-ci a traversé la surface active (10, 110),

- sachant que le dispositif de génération (4, 104), au nombre d'au moins un, est réalisé de manière à entraîner une modification de la zone de propagation des ondes de surface respectives (1, 101) à l'intérieur de la zone active (10, 110) respective en fonction de la fréquence d'entrée.

2. Dispositif pour la détection à résolution spatiale d'une grandeur extérieure selon la revendication 1, sachant que la grandeur extérieure comprend un champ magnétique local, un éclairage local (9, 11), un échauffement local et/ou une contrainte mécanique locale exercée sur le substrat.

3. Dispositif pour la détection à résolution spatiale d'une grandeur extérieure selon la revendication 1, où une partie au moins du substrat est fonctionnalisé de manière à pouvoir entrer en réaction chimique ou physique avec des agents extérieurs sous la forme d'une densité de masse linéique.

4. Dispositif pour la détection à résolution spatiale d'une grandeur extérieure selon l'une des revendications 1 à 3, où la grandeur qui interagit avec les ondes acoustiques de surface (1, 101) est transmise par des charges locales dans une partie au moins du substrat.

5. Dispositif pour la détection à résolution spatiale d'une grandeur extérieure selon l'une des revendications 1 à 4, sachant que le dispositif de génération (4, 104), au nombre d'au moins un, comprend un transducteur d'ondes de surface dans lequel le lieu de l'émission d'ondes de surface change le long de son axe en fonction du signal haute fréquence injecté.

6. Dispositif pour la détection à résolution spatiale d'une grandeur extérieure selon la revendication 5, où le transducteur d'ondes de surface pour la génération d'une onde acoustique de surface (1, 101) comprend un transducteur interdigité tronçonique (3) dans lequel l'espace entre les doigts qui détermine la fréquence n'est pas constant le long de l'axe du transducteur d'ondes de surface.

7. Dispositif pour la détection à résolution spatiale d'une grandeur extérieure selon la revendication 6, où le dispositif de réception (6, 106), au nombre d'au moins un, comprend un deuxième transducteur d'ondes de surface réalisé sous la forme d'un transducteur interdigité tronçonique (13) dans lequel l'espace entre les doigts qui détermine la fréquence n'est pas constant le long de l'axe du transducteur d'ondes de surface.

8. Dispositif pour la détection à résolution spatiale d'une grandeur extérieure selon l'une des revendications 1 à 7, comportant au moins deux dispositifs de génération (4, 104), sachant que les surfaces actives (10, 110) respectives se recouvrent au moins partiellement et que les dispositifs de génération (4, 104), au nombre d'au moins deux, sont disposés de manière à pouvoir envoyer des ondes de surface à la zone de recouvrement depuis des directions différentes et

- au moins deux dispositifs de réception (6, 106) déposés sur le substrat pour la réception des ondes de surface respectives une fois que celles-ci ont traversé la surface active (10, 110) respective.

9. Dispositif pour la détection à résolution spatiale d'une grandeur extérieure selon la revendication 8, dans la mesure où celle-ci dépend de la revendication 7, où les plages de dimensions des espaces entre les doigts changeant localement des dispositifs de génération, au nombre d'au moins deux, n'ont pas de valeurs communes.

10. Dispositif pour la détection à résolution spatiale d'une grandeur extérieure selon l'une des revendications 1 à 9, comportant un dispositif de réception radio pour la réception d'une fréquence radio pour l'injection sélective en fréquence dans le dispositif de génération (4, 104), au nombre d'au moins un, et un deuxième dispositif pour l'émission d'un signal de fréquence en fonction du signal reçu par le dispositif de réception (6, 106) pour la réception des ondes de surface (1, 101) une fois que celles-ci ont traversé la surface active (10, 110), de manière à permettre une interrogation radio du dispositif.

11. Dispositif pour la détection à résolution spatiale d'une grandeur extérieure selon la revendication 10 comportant des moyens de codification pour l'identification du dispositif interrogeable par radio.

12. Ensemble de spectromètre comportant un élément pour la déviation d'un rayon lumineux en fonction de la longueur d'onde et un dispositif pour la détection à résolution spatiale selon l'une des revendications 1 à 11 pour la détection de la direction de déviation du rayon lumineux.

13. Dispositif d'imagerie comportant
un dispositif selon l'une des revendications 1 à 11 et

- un dispositif de traitement pour la conversion du signal de sortie du dispositif en une image de la surface active (10, 110) sous l'influence de la grandeur extérieure moyennant un procédé de traitement d'images.

14. Procédé pour la détection à résolution spatiale d'une grandeur extérieure, où

- les ondes acoustiques de surface (1, 101) sont envoyées sur une surface active (10, 110) d'un substrat et détectées au moins dans une direction, sachant que les ondes de surface de fréquences différences traversent des zones respectivement différentes de la surface active (10, 110),

- au moins une partie de la zone active (10, 110) est amenée à entrer localement en interaction avec la grandeur extérieure, et

- une modification de paramètres des ondes de surface (1, 101) dû à cette interaction est détectée.

15. Procédé pour la détection à résolution spatiale d'une grandeur extérieure selon la revendication 14, où la grandeur extérieure comprend un champ magnétique local, un éclairage local (9, 11) du substrat, une contrainte mécanique locale exercée sur le substrat et/ou un échauffement local du substrat.

16. Procédé pour la détection à résolution spatiale d'une grandeur extérieure selon la revendication 14, où une partie au moins du substrat est fonctionnalisé de manière à pouvoir entrer en réaction chimique ou physique avec des agents extérieurs et de manière que la grandeur extérieure comprenne une densité de masse linéique.

17. Procédé pour la détection à résolution spatiale d'une grandeur extérieure selon l'une des revendications 14 à 16, où la grandeur extérieure est transmise par des charges locales dans le substrat.

18. Procédé pour la détection à résolution spatiale d'une grandeur extérieure selon l'une des revendications 14 à 17, où le déphasage de l'onde de surface (1, 101) dû à l'interaction avec la grandeur extérieure est traité à la fréquence d'entrée respective.

19. Procédé pour la détection à résolution spatiale d'une grandeur extérieure selon l'une des revendications 14 à 18, où le changement d'intensité de l'onde de surface dû à l'interaction avec la grandeur extérieure est traité à la fréquence d'entrée respective.

20. Procédé pour la détection à résolution spatiale d'une grandeur extérieure selon l'une des revendications 14 à 19, où le changement de temps de parcours de l'onde de surface (1, 101) dû à l'interaction avec la grandeur extérieure est traité à la fréquence d'entrée respective.

21. Procédé pour la détection à résolution spatiale d'une grandeur extérieure selon l'une des revendications 14 à 20, où la fréquence d'entrée est modifiée au cours d'un cycle de mesure de manière telle que la surface. active (10,110) entière du substrat soit traversée d'ondes de surface.

22. Procédé pour la détection à résolution spatiale d'une grandeur extérieure selon l'une des revendications 14 à 21, où des ondes de surface (1, 101) sont envoyées à travers la zone active (10, 110) depuis des directions différentes.

23. Procédé pour la détection à résolution spatiale d'une grandeur extérieure selon la revendication 22, où à aucun moment, les ondes de surface (1, 101) envoyées depuis des directions différentes n'ont la même fréquence.

24. Procédé pour la détection à résolution spatiale d'une grandeur extérieure selon l'une des revendications 22 ou 23, où les signaux mesurés sont traités moyennant des procédés tomographiques de traitement d'image.

25. Procédé pour la détection à résolution spatiale d'une grandeur extérieure selon l'une des revendications 14 à 24, où les ondes acoustiques de surface (1, 101) sont générées par injection d'une fréquence radio dans une antenne en liaison avec au moins un dispositif de génération (4, 104) pour la génération des ondes acoustiques de surface (1, 101), et où
les ondes acoustiques de surface (1, 101) sont reçues par un dispositif de réception (6, 106) comprenant un émetteur émettant un signal de fréquence, de manière à permettre l'interrogation sans fil de la détection à résolution spatiale.

26. Procédé pour la détection à résolution spatiale d'une grandeur extérieure selon la revendication 25, où une codification d'identification est en plus transmise sans fil.

27. Procédé pour la détection à résolution spatiale d'une grandeur extérieure selon l'une des revendications 14 à 26 comportant un dispositif selon l'une des revendications 1 à 11.

Figur 1

EP 1 212 832 B1

Figur 2a

EP 1 212 832 B1

Fig. 2b

*rel.* Phasenänderung [deg.]

17

Phase des SAW Signals [deg.]

19

21

Frequenz [MHz]

Fig. 2c

Figur 3 a

Figur 3 b

Figur 4